# EUROPÄISCHE PATENTSCHRIFT

(11) **EP 2 284 128 B1**
(45) Veröffentlichungstag und Bekanntmachung des Hinweises auf die Patenterteilung: **15.10.2014**
(21) Anmeldenummer: 10168800.0
(22) Anmeldetag: 08.07.2010
(51) Int. Cl.: C02F 3/12, C02F 3/22, C02F 9/00, C02F 1/34, C02F 1/00, C02F 3/00

(54) **Verfahren und Vorrichtung zur Reinigung von Abwasser sowie Trennvorrichtung dafür**
Method and device for cleaning waste water and separation device for same
Procédé et dispositif de nettoyage d'eaux usées et dispositif de séparation correspondant

(30) Priorität: 11.07.2009 DE 102009032763
(43) Veröffentlichungstag der Anmeldung: 16.02.2011
(73) Patentinhaber: Boller, Reinhard, 57234 Wilnsdorf (DE)
(72) Erfinder: Boller, Reinhard, 57234 Wilnsdorf (DE)
(74) Vertreter: Haverkamp, Jens

(56) Entgegenhaltungen:
- EP-A1- 1 428 800
- EP-A1- 1 860 073
- DE-A1- 19 538 387
- DE-A1- 19 830 647
- DE-A1-102007 058 177
- DE-U1- 20 302 765
- DE-U1-202004 001 854
- DE-U1-202007 000 048
- DE-U1-202007 016 942
- DE-U1-202008 009 513
- US-B1- 6 190 554

## Beschreibung

Gegenstand der Erfindung ist ein Verfahren zur Reinigung von Abwasser mittels einer Kleinkläranlage, insbesondere einer für einen dezentralen Einsatz vorgesehenen Kleinkläranlage, mit einem Zulauf, einer Vorklärstufe, einer biologischen Behandlungsstufe und einer der biologischen Behandlungsstufe zugeordneten Trennvorrichtung mit einem Klarwasserabzug, welches Verfahren prinzipiell nach einem Durchlaufverfahren durchgeführt wird. Ferner betrifft die Erfindung eine Kleinkläranlage, insbesondere für einen dezentralen Einsatz vorgesehene Kleinkläranlage, mit einem Zulauf, einer Vorklärstufe, einer biologischen Behandlungsstufe und einer der biologischen Behandlungsstufe zugeordneten Trennvorrichtung mit einem Klarwasserabzug.

Kleinkläranlagen oder kleine Kläranlagen dienen der dezentralen Abwasserbeseitigung in ländlich strukturierten Gebieten, in denen aus wirtschaftlichen oder sonstigen Gründen heraus kein Kanalanschluss vorhanden ist oder hergestellt werden und daher eine zentrale Abwasserreinigung nicht erfolgen kann. Hier wird die aus den bestehenden gesetzlichen Verpflichtungen heraus resultierende Notwendigkeit einer Abwasserreinigung durch Kleinkläranlagen realisiert. Kleinkläranlagen sind in vielfältiger Weise technisch differenziert ausgestaltet. Als Kleinkläranlagen sind unter anderem Pflanzenkläranlagen, Tropfkörperanlagen, Festbettanlagen, Wirbelbettanlagen, Membrananlagen und SBR-Anlagen bekannt. Weit verbreitet sind zwischenzeitlich die so genannten SBR-Anlagen (Sequencing-Batch-Reactor bzw. sequenzielles biologisches Reinigungsverfahren).

Das SBR-Verfahren, auch Aufstauverfahren genannt, behandelt das Abwasser "portionsweise". Eine Kammer übernimmt die mechanische Vorklärung. Dort setzen sich die Schmutzpartikel als Schlamm ab. Danach wird das Abwasser in bestimmten Zeitabständen in den biologischen Klärbereich (in genannten SBR-Reaktor) transportiert und dort gereinigt. Zwischen der mechanischen Behandlungsstufe und der biologischen Behandlungsstufe besteht keine direkte Verbindung. Die Trennung zwischen gereinigtem Abwasser und dem Belebtschlamm findet in der gleichen Behandlungsstufe nur durch eine zeitliche Trennung der Vorgänge statt.

Nachteilig wird bei nach dem SBR-Verfahren arbeitenden Kleinkläranlagen angesehen, dass die unterschiedlichen Wasserspiegel in den einzelnen Behandlungsstufen eine entsprechende Dichtigkeit der Trennwände erfordern. Insbesondere ist von Nachteil, dass bei Nachrüstung vorhandener Behälter vorhandene Durchlässe in den Trennwänden aufwändig verschlossen und abgedichtet werden müssen. Weiterhin sind Fördereinrichtungen notwendig, um das Abwasser aus der mechanischen Behandlungsstufe in die biologische Behandlungsstufe zu fördern. Zudem ist durch die Zykluszeit von 6 bis 12 Stunden (je nach Fabrikat) ein entsprechend großer Puffer notwendig, um das anfallende Abwasser entsprechend zwischenspeichern zu können. Weiterhin wird als nachteilig angesehen, dass bei den konventionellen SBR Systemen bei dem Klarwasserabzug große Wassermengen in kurzer Zeit in die der Kleinkläranlage nachgeschalteten Versickerungsanlagen gefördert werden. Viele Versickerungsanlagen können diese großen Wassermengen in den wenigen Minuten der Förderung nicht aufnehmen, so dass es hier zu einem Rückstau in die SBR Anlage und damit zu einem nicht gewünschten Aufwirbeln des abgesetzten Belebtschlammes kommt. Dies wiederum führt dazu, dass der aufgewirbelte Belebtschlamm während des Klarwasserabzuges in die Versickerungsanlage gefördert wird und diese dadurch zugesetzt wird. Eine aufwändige Sanierung ist die Folge.

Kleinkläranlagen, die nach dem SBR-System arbeiten sind beispielsweise aus DE 20 2007 000 048 U1, DE 20 2008 009 513 U1, DE 198 30 647 A1, DE 195 38 387 A1, DE 20 2004 001 854 U1, EP 1 428 800 A1 und DE 20 2007 016 und DE 203 02 765 U1 bekannt.

Eine Alternative zu Reinigungsverfahren gemäß dem SBR-Prinzip stellt das im Markt bekannte so genannte CBR-Verfahren (Continuous-Batch-Reactor bzw. kontinuierliche biologische Reinigung) dar, bei dem im Gegensatz zum SBR-Verfahren die mechanische Vorreinigung und die biologische Behandlungsstufe über eine Öffnung miteinander verbunden sind, so dass Abwasser aus der mechanischen Behandlungsstufe direkt in die biologische Behandlungsstufe fließen kann. In einer in die biologische Behandlungsstufe eingehängten Trennvorrichtung (Separator) findet die notwendige Trennung zwischen gereinigtem Abwasser und Belebtschlamm statt. An die Trennvorrichtung ist eine Ablaufdrossel angebracht, die den Abfluss aus der Kläranlage begrenzt. Gesteuert wird bei dem CBR-Verfahren der Durchsatz durch den Zulauf. Dies hat zur Folge, dass, wenn mehr Abwasser der Kläranlage zufließt, als durch die Ablaufdrossel abflieβen kann, der Behälter beziehungsweise die einzelnen Behandlungsstufen eingestaut werden. Der Überstau wird nach und nach durch den Abfluss aus der Drossel abgebaut.

Nachteilig bei diesem Verfahren ist, dass in dem Separator zeitgleich die Absetzvorgänge des Schlammes (Abwärtsbewegungen) und dass ein Zustrom von zu der Drossel hin aufsteigendem Abwasser (Aufwärtsbewegung) stattfinden. Nur bei einer entsprechenden Differenz der Abwärtsgeschwindigkeit des Schlammes zu der Aufwärtsbewegung des Abwassers kann verhindert werden, dass Schlammbestandteile mit in den Ablauf kommen. Dabei funktioniert dieser Trennvorgang nur, wenn die Abwärtsgeschwindigkeit des Schlammes größer ist als die Aufwärtsbewegung des Abwassers. Da aber bekannt ist, dass die Absetzeigenschaften eines Schlammes durchaus variieren können, kann es hier zu Schlammabtrieb aufgrund fehlender Geschwindigkeitsdifferenzen kommen. Weiterhin ist von Nachteil, dass die Drosselvorrichtung verstopfen kann und somit auch größere Mengen Abwasser über den Notüberlauf fließen können. Sobald der Notüberlauf aktiv ist, steigt die Geschwindigkeit des aufwärtsströmenden Abwassers, so dass die Geschwindigkeit des aufwärtsströmenden Abwassers größer ist als die Geschwindigkeit des sich abwärts bewegenden Schlammes. Dies führt zu einem entsprechend massivem Schlammabtrieb und einer damit einhergehenden Gewässerverschmutzung sowie einem Verlust an Biomasse in dem biologischen Behandlungssystem.

Weiterhin ist bei dem CBR-Verfahren der Druckluftheber für den Überschussschlammabzug an die Luftleitung für die Belüftung gekoppelt. Dadurch wird bei jeder Belüftung Überschussschlamm aus der biologischen Stufe in die mechanische Stufe gefördert. Hierbei handelt es sich um einen ständigen Abzug von Belebtschlamm in die mechanische Stufe. Da aber Überschussschlamm nur in Abhängigkeit der jeweiligen Belastung entsteht, ist ein kontinuierlicher Abzug während der Belüftungsphase nicht geeignet, eine für das Verfahren erforderliche gleichbleibende bzw. ausreichende Belebtschlammmenge zu gewährleisten. Im Unterlastbetrieb wird zu viel Belebtschlamm in die mechanische Vorstufe befördert (bei Unterlast entsteht eben nur wenig Überschussschlamm, obwohl durch die permanente Überschussschlammförderung ständig Belebtschlamm in die mechanische Stufe gefördert wird), bei entsprechend hoher Last kann die feste Kopplung der Überschussschlammförderung an die Belüftung auch zu einer zu niedrigen Entnahme von Belebtschlamm und damit zu einem zu hohen Belebtschlammanteil in der biologischen Stufe führen.

Ausgehend von dem vorstehend diskutierten Stand der Technik liegt der Erfindung daher die Aufgabe zugrunde, ein Verfahren zur Reinigung von Abwasser mittels einer Kleinkläranlage sowie eine Kleinkläranlage vorzuschlagen, mit dem die zu den vorbeschriebenen SBR- und CBR-Verfahren aufgezeigten Nachteile vermieden, zumindest jedoch reduziert sind.

Gelöst wird die verfahrensbezogene Aufgabe durch ein Verfahren mit den Merkmalen des Anspruchs 1.

Die vorrichtungsbezogene Aufgabe wird erfindungsgemäß durch eine Kleinkläranlage mit den Merkmalen des Anspruchs 4 gelöst.

Unter dem im Oberbegriff des unabhängigen Anspruch benutzten Begriff, dass das Verfahren prinzipiell nach einem Durchlaufverfahren durchgeführt wird, ist im Rahmen dieser Ausführungen zur Unterscheidung gegenüber einem SBR-Verfahren zu verstehen. Somit umfasst dieser Begriff einen Betrieb einer Kleinkläranlage, in der eine Reinigung nicht chargenweise (batchweise) und demzufolge ein Flüssigkeitswechsel batchweise in einer Stufe erfolgt. Somit sind unter diesem Begriff sämtliche Verfahren zum Betrieb einer Kleinkläranlage zu verstehen, bei denen im weitesten Sinne ein kontinuierlicher Durchsatz vorgesehen ist. Dieses Verfahren beinhaltet, bei denen, wie beansprucht ein Klarwasserabzug periodisch vorgenommen wird und mit einem solchen Klarwasserabzug nur einen Teil des in einer Trennvorrichtung befindlichen Flüssigkeit abgezogen wird. Der in diesem Zusammenhang verwendete Begriff eines Durchlaufverfahrens bezieht sich nicht auf eine notwendige hydraulische Verbindung der einzelnen Prozessbecken bzw. Stufen.

Bei dem beanspruchten Verfahren wird ein Klarwasserabzug aktiv betrieben. Als Aktor zum Abziehen von Klarwasser aus der Trennvorrichtung wird eine Pumpe, beispielsweise ein Druckluftheber verwendet. Dieser wird auch aus Energiespargründen diskontinuierlich betrieben. Die Pumpe ist durch eine die Prozesse der Kleinkläranlage steuernde Steuereinheit ansteuerbar. Die Klarwasserförderperioden zum Abziehen von Klarwasser aus der Trennvorrichtung sind zeitlich so bemessen, dass nur ein Bruchteil der in der Trennvorrichtung befindlichen Flüssigkeit - das Klarwasser - abgezogen wird. Abgezogen wird das Klarwasser aus der Trennvorrichtung aus seinem obersten Bereich. Mithin ist der mündungsseitige Eingang der bei einer solchen Kleinkläranlage vorhandenen Klarwasserabzugspumpe in diesem Bereich der Trennvorrichtung angeordnet. Bei diesem Verfahren ist ferner vorgesehen, dass der Zufluss von vorgeklärtem Abwasser aus der Vorklärstufe in die biologische Behandlungsstufe an den Vorgang eines Klarwasserabzuges gekoppelt ist. Eine solche Kopplung erfolgt hydraulisch, und zwar dergestalt, dass allein aufgrund des sinkenden Flüssigkeitsspiegels in der Trennvorrichtung und damit in der biologischen Behandlungsstufe ein Nachströmen von vorgeklärtem Abwasser aus der Vorklärstufe in die biologische Behandlungsstufe selbsttätig erfolgt.

Die Trennvorrichtung kann innerhalb der biologischen Behandlungsstufe angeordnet sein. Gleichfalls ist es möglich, diese der biologischen Behandlungsstufe nachzuschalten. Die Trennvorrichtung und die biologische Behandlungsstufe stehen in einer hydraulischen Verbindung miteinander.

Bei einem Betrieb der Anlage wird in dem zur Trennung von gereinigtem Abwasser und dem Belebtschlamm abgetrennten Teil das gereinigte Abwasser in typischerweise kurzen Zeitintervallen mit einer Fördereinrichtung aus der Anlage gefördert. Das zwischen den Fördervorgängen sich in den Behandlungsstufen ansammelnde Abwasser wird dabei eingestaut, da die einzelnen Behandlungsstufen über entsprechende Verbindungsöffnungen oder Leitungen miteinander verbunden sind. Der sich in der Trennvorrichtung zur Trennung von gereinigtem Abwasser und Belebtschlamm im unteren Bereich der Trennvorrichtung ansammelnde Belebtschlamm gelangt über eine entsprechend ausgebildete Ableitungsvorrichtung wieder in den Bereich der biologischen Abwasserbehandlung, so dass hierüber der notwendige Rücklaufschlammkreislauf geschlossen wird. Der notwendige Abzug von Überschussschlamm aus der biologischen Behandlungsstufe in den Bereich der mechanischen Behandlungsstufe erfolgt dabei vorzugsweise nach einer Belüftungspause von mindestens 15 Minuten, optimal nach einer Belüftungspause zwischen 30 oder 90 Minuten in den Nachtstunden. Dabei ist die Ansaugöffnung der Überschussschlammpumpe einer bevorzugten Ausführung in einem definierten Abstand von der Sohle der biologischen Behandlungsstufe anzubringen, damit die zum Betrieb der biologischen Stufe notwendige Schlammmenge unterhalb der Ansaugöffnung stets verbleibt und nur der tatsächlich überschüssige Schlamm, der oberhalb dieses Niveaus liegt, in die mechanische Behandlungsstufe gefördert wird. Dadurch kann ein gleich bleibender Gehalt an Belebtschlamm in der Anlage gewährleistet werden.

In einer vorzugsweisen Ausgestaltung wird einer oder zwei der einzubauenden Fördereinrichtungen, möglichst in Form von Drucklufthebern, an der Trennvorrichtung direkt befestigt, so dass die während des Fördervorganges übertragenen Schwingungen an der Trennvorrichtung anhaftende Schlammpartikel lösen.

Weiterhin kann mit einer vorzugsweise Ausgestaltung der Fördereinrichtung für den Klarwasserabzug mit einer entsprechend ausgebildeten Ansaugöffnung sich möglicherweise angesammelter Schwimmschlamm direkt mit heraus gefördert werden, so dass es hier nicht zu einer Ansammlung größerer Schwimmschlamm Mengen kommt, die eine entsprechende Probennahme in der Trennvorrichtung erschweren. In einer alternativen Ausgestaltung kann die Ansaugöffnung auch so ausgebildet sein, dass durch ein entsprechend getauchtes Rohr keine Schwimmstoffe in die Fördervorrichtung gelangen können.

In einer besonderen Ausgestaltung kann die Verbindung zwischen der mechanischen Vorbehandlung und der biologischen Stufe unterbrochen sein, so dass das mechanisch vorgereinigte Abwasser ebenfalls durch eine Fördereinrichtung in kurzen Zeitabständen beziehungsweise in Zeitabständen, die an die Klarwasser Fördervorgänge angepasst sind, in die biologische Behandlungsstufe gefördert wird.

Einfluss auf die Länge der Klarwasserabzugsperioden und/oder der zwischen zwei Klarwasserabzugsperioden befindlichen Pausen - also den Perioden, in denen kein Klarwasser abgezogen wird - kann der in der Vorklärstufe vorhandene Flüssigkeitsspiegel von darin befindlichem Abwasser sein. Gleichfalls besteht die Möglichkeit, die Länge von Klarwasserabzugsperioden und/oder zwischen zwei Klarwasserabzugsperioden befindlicher Pausen in Abhängigkeit von einer Änderung des in der Vorklärstufe befindlichen Flüssigkeitsspiegels zu steuern.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: einen schematisierten Querschnitt durch eine Kleinkläranlage,
- **Fig. 2:**: einen weiteren Querschnitt durch die Kleinkläranlage der Figur 1, wobei die Schnittebene gegenüber der Schnittdarstellung der Fi- gur 1 um 90 Grad versetzt ist,
- **Fig. 3:**: eine geschnittene Draufsicht auf die Kleinkläranlage der Figuren 1 und 2,
- **Fig. 4:**: einen Ausschnitt aus einer weiteren Kleinkläranlage, die prinzi- piell derjenigen der Figur 1 entspricht, zum Darstellen einer darin befindlichen Trennvorrichtung mit ihrem Klarwasserabzug und
- **Fig. 5:**: eine Draufsicht auf die Trennvorrichtung der Figur 4.

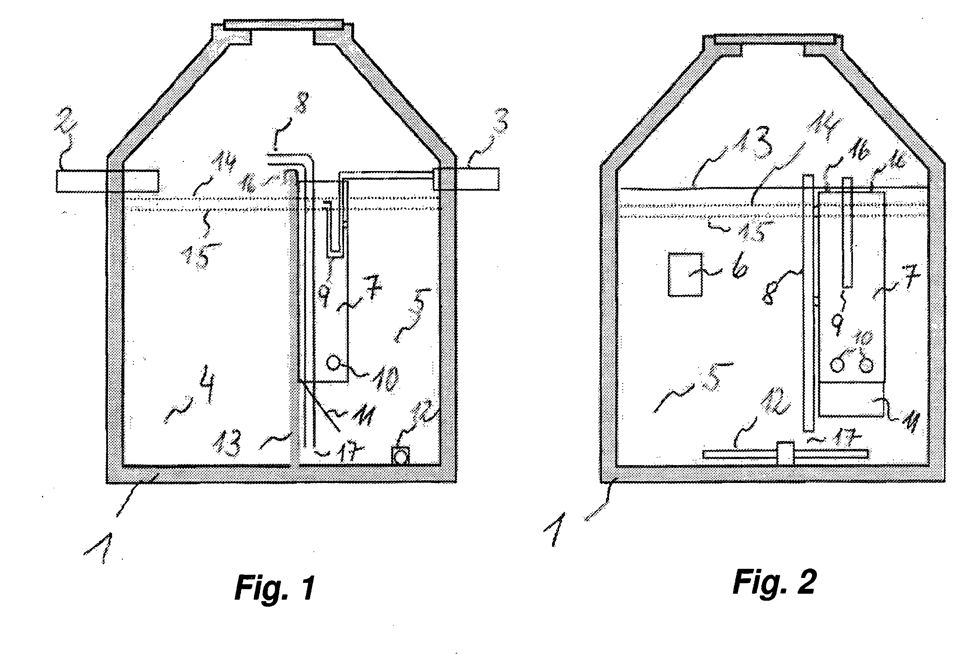

Figur 1 zeigt beispielhaft eine Kleinkläranlage, vorgesehen für einen dezentralen Einsatz. Die Kleinkläranlage verfügt über einen Behälter 1 mit einem Zulaufrohr 2 in den Behälter, einem Ablaufrohr 3 aus dem Behälter 1 sowie einer Belüftungsvorrichtung 12. Der Behälter 1 ist mit einer Trennwand 13 in zwei Kammern unterteilt, wobei die Kammern verschiedene Behandlungsstufen darstellen. In der beispielhaften Darstellung dient die Kammer 4 zum Durchführen einer mechanischen Vorreinigung (Vorklärung, Schlammspeicher) und ist daher auch als Vorklärstufe anzusprechen. Die andere Kammer - die Kammer 5 - ist eine biologische Behandlungsstufe. Die beiden Behandlungsstufen 4, 5 sind mit einem beispielhaft dargestellten Durchlass 6 in der Trennwand 13 miteinander verbunden, so dass vorgeklärtes Abwasser nach der mechanischen Vorreinigung, durch das hydraulische Gleichgewicht gesteuert, aus der Kammer 4 in die Kammer 5 laufen kann. Bei dem Durchlass 6 handelt es sich um eine Öffnung in der Trennwand 13.

In der biologischen Behandlungsstufe ist eine Trennvorrichtung 7 eingebaut, die bei dem dargestellten Ausführungsbeispiel mit einer Haltevorrichtung 16 an der Trennwand 13 auf einfache Weise befestigt ist. Die Haltevorrichtung 16 ist als Haken konzipiert, die über den oberen Abschluss der Trennwand 13, wie in Figur 1 ersichtlich, greift. Innerhalb der Trennvorrichtung 7, die rund oder rechteckig oder quadratisch oder in einer anderen geometrischen Form gebaut, ist ein Druckluftheber 9 oder eine sonstige Förderervorrichtung als Klarwasserabzugspumpe eingebaut. Die Trennvorrichtung 7 ist im unteren Bereich geöffnet und verfügt dort über eine entsprechend ausgebildete Schräge 11. Weiterhin sind in einer beispielhaften Ausgestaltung im unteren Bereich der Trennvorrichtung 7 eine oder mehrere Öffnungen 10 enthalten.

Ein weiterer Druckluftheber 8 oder eine sonstige Förderervorrichtung zur Förderung von Überschussschlamm aus der biologischen Stufe 5 in die mechanische Vorreinigung 4 ist vorzugsweise ebenfalls an der Trennvorrichtung 7 befestigt. Neben einer einfachen Montage, die die in der biologischen Reinigungsstufe 5 angeordnete Trennvorrichtung 7 bietet, werden die beim Betrieb einer oder beider Fördereinrichtung entstehenden Schwingungen genutzt, um an der Trennvorrichtung 7 oder an der ausgebildeten Schräge 11 anhaftenden Schlamm zu lösen, damit dieser schwerkraftbedingt wieder in die biologische Behandlungsstufe 5 gelangen kann. Um dieses zu ermöglichen versteht es sich, dass die Fördereinrichtungen 8, 9 in einer Art und Weise an die Trennvorrichtung 7 angeschlossen sind, damit die bei einem Betrieb derselben entstehenden Schwingungen auf die Trennvorrichtung 7 übertragen bzw. in diese induziert werden.

Nachfolgend ist die Funktionsweise der Kleinkläranlage 1 beschrieben:

Anfallendes Abwasser wird dem Behälter 1 mit dem Zulaufrohr 2 zugeführt und gelangt somit in die mechanische Vorreinigung 4. Dort trennen sich Stoffe, deren spezifisches Gewicht sich vom Abwasser unterscheidet, durch Absetzvorgänge vom Abwasser. Stoffe mit einem höheren spezifischen Gewicht sedimentieren und sammeln sich im unteren Bereich der mechanischen Vorreinigung 4. Der so abgesetzte Schlamm wird z. B. jährlich oder bedarfsgerecht von einem Saugwagen entfernt. Stoffe mit einem geringeren spezifischen Gewicht als Wasser schwimmen auf.

Das durch die vorbeschriebenen Vorgänge vorgeklärte Abwasser gelangt aus der mechanischen Vorreinigung 4 durch die Öffnung 6 der Trennwand 13 in die biologische Behandlungsstufe 5. Dort findet die biologische Abwasserreinigung statt. Die zum biologischen Abwasserreinigungsprozess notwendige Luft wird über einen beispielhaft dargestellten Belüfter 12 zugeführt. Der schematisiert dargestellte Belüfter 12 ist in nicht näher dargestellter Art und Weise an einen Verdichter angeschlossen, mit dem Umgebungsluft für die Zwecke der Belüftung in die biologische Behandlungsstufe 5 zugeführt wird. In der biologischen Behandlungsstufe 5 befindet sich Belebtschlamm, durch den das vorgeklärte Abwasser gereinigt wird. Das biologische gereinigte Abwasser kann die biologische Behandlungsstufe 5 nur durch die Trennvorrichtung 7 verlassen. In der Trennvorrichtung 7 findet eine Trennung des biologisch gereinigten Abwassers von dem Belebtschlamm statt. Aufgrund des Dichteunterschiedes sinkt der Belebtschlamm in der Trennvorrichtung 7 nach unten und gelangt über die ausgebildete Schräge 11 wieder zurück in die biologische Behandlungsstufe 5. Um den Absetzvorgang in möglichst geringem Maß zu beeinträchtigen, sind in einer vorzugsweisen Ausgestaltung im unteren Bereich der Trennvorrichtung 7 eine oder mehrere Öffnungen 10 angebracht. Die Öffnungen 10 können als Zufluss und somit zum Herstellen einer hydraulischen Verbindung zwischen der biologischen Behandlungsstufe 5 und dem Inneren der Trennvorrichtung 7 dienen. Somit erfolgt ein Zustrom vornehmlich durch die Öffnungen 10 hinweg, während der sedimentierte Belebtschlamm durch die untere Öffnung der Trennvorrichtung 7 hindurch und auf die Schräge 7 hin sedimentiert.

Der Druckluftheber 9 ist innerhalb der Trennvorrichtung 7 dergestalt angeordnet, damit sich seine mündungsseitige Öffnung in einem oberen Abschnitt der Trennvorrichtung befindet.

Der Druckluftheber 9 fördert in vorbestimmten Zeitabständen (beispielsweise alle 30 Minuten) gereinigtes Abwasser aus der Trennvorrichtung 7 in den Ablauf 3. Zu diesem Zweck ist der Druckluftheber 9 bzw. der den Druckluftheber 9 beaufschlagende Verdichter in nicht näher dargestellter Art und Weise an eine Steuereinheit angeschlossen. Durch das periodische Fördern von Abwasser des in der Trennvorrichtung 7 typischerweise regelmäßig in Zeiträumen, in denen das Abwasser in der Trennvorrichtung 7 ohne Fließbewegung verweilt, so dass in diesen Zeiträumen die Trennung von biologisch gereinigtem Abwasser und Belebtschlamm ohne beeinträchtigende Strömungen stattfinden kann. Die Größe der Trennvorrichtung 7 sowie die Zeitabstände zwischen zwei Klarwasserabzugsvorgängen hat hierbei maßgeblichen Einfluss auf den Trennungsvorgang zwischen biologisch gereinigtem Abwasser und dem Belebtschlamm. Die Dauer des Fördervorganges sowie die Größe der Trennvorrichtung sind dergestalt aufeinander abgestimmt, das nur immer Abwasser aus der Trennvorrichtung herausgefordert wird, welches sich bereits in den Zeitraum vor dem aktuellen Fördervorgang von dem Belebtschlamm getrennt hat. Damit wird vermieden, dass während eines aktuellen Fördervorganges in die Trennvorrichtung 7 nachströmendes Abwasser mit Belebtschlammbestandteilen so weit aufsteigen kann, dass die Klarwasserabzugspumpe, die bei dem dargestellten Ausführungsbeispiel durch den Druckluftheber 9 realisiert ist Klarwasser mit noch enthaltenen Belebtschlammbestandteilen erfasst. Wird in einer beispielhaften Ausgestaltung der Druckluftheber 9 in der Trennvorrichtung 7 so eingebaut, dass die geförderte Abwassermenge begrenzt ist auf ein unteres Wasserniveau 15, ist ein problemloser Trennungsvorgang von biologisch gereinigtem Abwasser und Belebtschlamm gegeben. Zwischen zwei Fördervorgängen des Drucklufthebers 9 sorgt Abwasser, welches in dieser Zeit den Behälter 1 über die Zulaufleitung 2 zufließt dafür, dass in beiden Kammern 4, 5 der Wasserspiegel ansteigt, beispielsweise auf das Niveau des Wasserspiegels 14. Bei dem nächsten Fördervorgang sinkt der Wasserspiegel in der Trennvorrichtung 7 und damit in der biologischen Behandlungsstufe 5. Infolge der hydraulischen Verbindung zu der Vorklärstufe 4 mittels des Durchganges 6 strömt gleichzeitig mit dem Abzug von Klarwasser aus der Trennvorrichtung 7 bzw. der biologischen Reinigungsstufe 5 dieselbe Menge an vorgeklärtem Abwasser in die biologische Behandlungsstufe 5 ein. Durch die Steuerung kann dabei die Laufzeit für den Druckluftheber 9 begrenzt werden. Damit sorgt die höhenmäßige Anordnung des Drucklufthebers 9 in Verbindung mit der Steuerung dafür, dass in einem Zeitintervall jeweils nur eine fest definierte Menge aus der Trennvorrichtung 7 heraus gefördert wird. Dies wiederum gewährleistet, dass für den Absetzvorgang der jeweils erforderliche Zeitraum zur Verfügung steht. Eine hydraulische Überlastung der Trennvorrichtung 7 ist damit ausgeschlossen. Das zusätzliche Anordnen eines Schwimmers innerhalb der Vorklärstufe 4 kann einen Hochwasseralarm melden oder Belüftungszeiten regulieren oder Förderzeiträume des Drucklufthebers 9 steuern.

Der vorstehend beschriebene Prozess soll aufgrund seiner Relevanz nachfolgend an einem Beispiel verdeutlicht werden:

Vorhanden ist ein Behälter mit 2 m Durchmesser und eine Aufteilung in zwei Kammern durch eine mittige Trennwand, die den Behälter in zwei gleichgroße Hälften aufgeteilt. An den Behälter angeschlossen sind vier Einwohner mit einer täglichen Abwassermenge von 150 I pro Einwohner. Der Behälter hat eine Wassertiefe von 1,2 m. Die Oberfläche jeder Behandlungsstufe beträgt circa 1,5 m². Der durchschnittliche Abwasserzufluss beträgt 0,06 m³/h (der so genannte Q₁₀ Wert). Die Trennvorrichtung hat eine Länge von 40 cm und einer Breite von 30 cm und eine Höhe von 80 cm. Damit ergibt sich ein Volumen von circa 96 I in der Trennvorrichtung. Die Klarwasserabzugspumpe wird in diesem Beispiel alle 30 Minuten für je eine Minute eingeschaltet. Die Klarwasserabzugspumpe hat eine Förderleistung von 30 I pro Minute. Während die Klarwasserabzugspumpe diese 30 I gereinigtes Abwasser aus der Trennvorrichtung in den Ablauf der Anlage fördert, strömen im unteren Bereich der Trennvorrichtung eben diese 30 I nach, wobei diese nachströmende Menge noch ein Gemisch aus gereinigtem Abwasser und Belebtschlamm darstellt. Durch die Größe der Trennvorrichtung von circa 96 I verweilt das Abwasser circa 1,5 Stunden durchschnittlich in der Trennvorrichtung (umgerechnet mit einer Entnahme von 30 I pro halbe Stunde und einem Volumen der Trennvorrichtung von circa 96 I). Diese beispielhafte Berechnung verdeutlicht, dass durch das Förderintervall, die Fördermenge sowie das Volumen der Trennvorrichtung stets eine entsprechende Absetzzeit für eine gesicherte Trennung von gereinigtem Abwasser und Schlamm gewährleistet ist. Gleichzeitig ist gewährleistet, dass aus der Anlage immer nur aus dem oberen Bereich gereinigtes Abwasser ohne Belebtschlamm heraus gefördert wird. In dem Beispiel ergibt sich ein rechnerischer Aufstau in beiden Behandlungsstufen von circa 1 Zentimeter (in einer Stunde fließen theoretisch circa 60 I Abwasser der Anlage zu, somit in einer halben Stunde zirka 30 I). Zwischen zwei Fördervorgängen für den Klarwasserabzug sammeln sich somit jeweils zirka 30 I an. Dadurch, dass beide Behandlungsstufen mit einem Durchlass hydraulisch miteinander verbunden sind, ergibt sich bei einer Oberfläche von rund 3 m² ein Einstau bzw. Aufstau von 1 Zentimeter. Die Trennvorrichtung, der Druckluftheber für den Klarwasserabzug sowie der Ablauf sind dabei so gestaltet, dass auch ein höherer Einstau (z.B. bei einem Badewannenstoß oder einem sonstigen erhöhten hydraulischen Zulauf) keine Probleme verursacht. Hierzu wird der obere Bereich der Trennvorrichtung so konstruiert, dass er zum Beispiel 10 cm über dem eigentlichen Wasserspiegel hinausragt. Am Ablauf kann eine entsprechende Abdichtung des Ablaufrohres verhindern, dass hier ein Überstau zum unkontrollierten Abfließen von Abwasser mit Belebtschlamm führt.

Durch den Prozess der biologischen Abwasserreinigung vermehrt sich der Belebtschlamm. Es entsteht dabei Überschussschlamm, der in den Bereich der mechanischen Vorreinigung zu fördern ist. Dieser Vorgang wird durch den Druckluftheber 8 bewirkt. Der Druckluftheber 8 ist bei dem dargestellten Ausführungsbeispiel an der Trennvorrichtung 7 befestigt. Der Abstand 17 der Ansaugöffnung des Drucklufthebers 8 bewirkt bei einem korrekten Abstandsmaß 17, dass jeweils die korrekte Menge an Überschussschlamm aus der biologischen Behandlungsstufe heraus gefördert wird. Das Abstandsmaß bewegt sich in Abhängigkeit der Absetzzeit für den Schlamm zwischen 10 und 50% der Wassertiefe des Wasserspiegels 15. Versuche haben gezeigt, dass speziell der Bereich zwischen 20 und 30% der Wassertiefe des Wasserspiegels 15 ein bevorzugtes Abstandsmaß darstellt. Die abgesetzte Belebtschlammmenge, die sich innerhalb des Abstandsmaßes 17 befindet, ist die zum korrekten Betrieb der biologischen Stufe 5 notwendige Belebtschlammmenge. Diese Belebtschlammmenge innerhalb des Abstandsmaßes 17 kann durch die Anordnung des Drucklufthebers 8 nicht in die mechanische Stufe gefördert werden. Nur der zusätzlich entstehende Belebtschlamm, der so genannte Überschussschlamm, der über das Abstandsmaß 17 hinausgeht, wird von dem Druckluftheber 8 in die mechanische Stufe gefördert. Durch diese Besonderheit kann eine stets gleich bleibende Belebtschlammmenge in der biologischen Stufe gesichert werden.

Für den Überschussschlammabzug ist es erforderlich, einmal oder mehrmals am Tag die Belüftung durch eine entsprechende Programmierung in der Steuerung für einen Zeitraum zu unterbrechen, damit sich der Belebtschlamm in der biologischen Behandlungsstufe absetzen und der Druckluftheber 8 die über das Abstandsmaß 17 hinausgehende Menge an Belebtschlamm als Überschussschlamm in die mechanische Stufe fördern kann.

Der Druckluftheber 8 kann zudem dazu genutzt werden, eine Rezirkulation zu bewirken. Dadurch, dass über den Druckluftheber neben der eigentlichen Schlammförderung auch gereinigtes beziehungsweise teilgereinigtes Abwasser aus der biologischen Stufe in die mechanische Vorstufe 4 gefördert wird, kann der Prozess der Denitrifikation optimiert werden. Das in der biologischen Stufe oxidierte Ammonium kann unter den idealen Bedingungen (Abwesenheit von Luftsauerstoff, ausreichendes Kohlenstoffdargebot) in der mechanischen Vorstufe 4 denitrifiziert werden. Der damit einhergehende Kohlenstoffabbau führt zu einer entsprechenden Reduktion an Gebläseleistung in der biologischen Stufe sowie zu einer entsprechenden Optimierung des pH Wertes (durch die Nitrifikation wird durch das freisetzen von H+ Ionen der pH-Wert abgesenkt; durch den Prozess der Denitrifikation kann diese pH-Wert Absenkung wieder aufgehoben werden).

Ein weiterer Vorteil der Anordnung besteht darin, dass über den Druckluftheber 8 neben der eigentlichen Schlammförderung auch gereinigtes beziehungsweise teilgereinigtes Abwasser aus der biologischen Stufe 5 in die mechanische Vorstufe 4 gefördert wird und damit dafür sorgt, dass infolge der hydraulischen Verbindung zwischen den beiden Stufen 4, 5 kohlenstoffhaltiges Abwasser in die biologische Stufe 5 gelangt. Insbesondere im Zeiträumen, in denen die Kleinkläranlage nur gering belastet wird (Unterlastbetrieb), kann durch eine entsprechende Rezirkulation die biologische Stufe mit Kohlenstoff und sonstigen Nährstoffen versorgt werden, so dass der Belebtschlamm aktiv bleibt. Weiterhin sorgt dieser Vorgang für eine Vergleichmäßigung von Belastungsschwankungen. In Verbindung mit einer entsprechend programmierten Steuerung können verschiedene Förderzeiten und damit Rezirkulationswassermengen, auch für unterschiedliche Belastungen, eingestellt und verwirklicht werden.

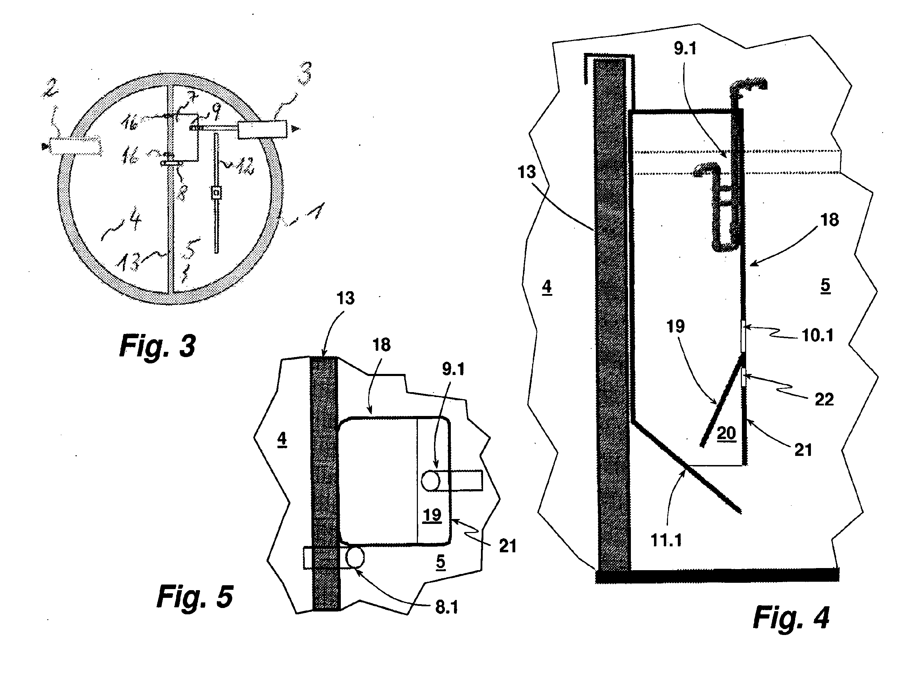

In den Figuren 4 und 5 ist eine Trennvorrichtung 18 gemäß einer weiteren Ausgestaltung gezeigt. Die Trennvorrichtung 18 ist prinzipiell konzipiert wie die Trennvorrichtung 7 des Ausführungsbeispiels der Figuren 1 bis 3. Die Trennvorrichtung 18 ist ebenso in eine biologische Behandlungsstufe 5 einer Kleinkläranlage eingehängt, und zwar mittels Haken, die die Trennwand 13 zwischen den beiden Stufen 4, 5 trennt. Die Trennvorrichtung 18 ist in Figur 4 in einem Längsschnitt gezeigt. Die Trennvorrichtung 18 verfügt oberhalb ihrer Schräge 11.1 über ein an der von der Trennwand 13 des Behälters 1 wegweisenden Wand 21 innenseitig angeformtes Leitelement 19. Das Leitelement 19 ist nach innen in Richtung zur Schräge 11.1 geneigt. Das Leitblech 19 bildet somit mit der Innenseite der vorgenannten Wand 21 der Trennvorrichtung 18 eine nach unten hin offene Aufnahme 20. Die Aufnahme 20 verfügt in ihrem oberen Endabschnitt innerhalb der Wand 21 der Trennvorrichtung 18 über eine oder mehrere Durchbrechungen 22. Die auf diese Weise gebildete Aufnahme 20 dient als Luftblasenfalle, und zwar zur Aufnahme von Luftblasen, die durch die Belüftung 12.1 in die biologische Behandlungsstufe 5 eingebracht werden, wenn diese durch die unterseitige Öffnung der Trennvorrichtung 18 in diese hineintreten. Aufgefangen werden diese Luftblasen aufgrund des Bestrebens derselben nach oben zu steigen. Hintergrund des Auffangens von oberhalb der Schräge 11.1 eintretenden Luftblasen innerhalb der Aufnahme 20 ist, dass diese nicht in die eigentliche Trennvorrichtung 18 eintreten, wodurch der Trennvorgang zwischen Belebtschlamm und gereinigtem Abwasser beeinträchtigt werden würde. Ausgenutzt wird bei diesem Prinzip, dass die Schräge 11.1 ein Eindringen von Luftblasen, die lotrecht unterhalb der Schräge 11.1 aufsteigen, verhindert. Dieses gilt prinzipiell auch für die durch die Schräge 11.1 offen gelassenen Bereiche. Jedoch kann nicht gänzlich verhindert werden, dass durch die sich unterseitig an die Wand 21 anschließende Öffnung bei einem Betrieb der Belüftung 12 vereinzelt Luftblasen eintreten.

Bei dem Leitelement 19 handelt es sich somit um ein Einbauelement, welches nach Art einer Schikane eintretende Luftblasen fängt. Diese treten aus den in die Wand 21 eingebrachten Durchbrechungen 22 wieder in die biologische Stufe 5 ein. Die Aufnahme 20 als Luftblasenfalle ist vorstehend beispielhaft beschrieben. Für einen Fachmann ergeben sich zahlreiche andere Ausgestaltungen, dasselbe zu bewirken, ohne dass diese im Einzelnen näher beschrieben werden müssten.

Die Öffnungen 10 bzw. 10.1 können, sollte die Gefahr bestehen, dass durch diese unerwünschte Luftblasen in das Innere der jeweiligen Trennvorrichtung 7 bzw. 18 eintreten, ebenfalls mit einer Luftblasenfalle, wie vorstehend prinzipiell beschrieben, ausgerüstet sein.

Aus der Draufsicht der Figur 5 wird deutlich, dass sowohl die Klarwasserabzugspumpe 9.1 als auch die Überschussschlammpumpe 8.1 unmittelbar an die Trennvorrichtung 18 angeschlossen sind. Dieses erfolgt vor dem Hintergrund, durch die bei einem Betrieb der Pumpen 8.1 bzw. 9.1 auftretenden Schwingungen bzw. Vibrationen auf die Trennvorrichtung 18 zu übertragen. Auf diese Weise wird an der Innenwand derselben anhaftender Belebtschlamm abgerüttelt und sinkt nach unten.

Die bei den beschriebenen Ausführungsbeispielen eingesetzten Pumpen können höhenverstellbar gehalten sein. Eine solche Höhenverstellbarkeit kann in Abhängigkeit von dem Flüssigkeitsspiegel innerhalb der jeweiligen Trennvorrichtung und somit innerhalb der biologischen Behandlungsstufe erfolgen.

In einer anderen Ausgestaltung einer Kleinkläranlage kann die Öffnung 6 auch verschlossen werden, so dass auch die Beschickung der biologischen Reinigungsstufe aus der mechanischen Reinigung über eine Fördereinrichtung, vorzugsweise einen Druckluftheber erfolgt.

Die in den Figuren ersichtliche Aufteilung ist nur beispielhaft. So kann der Behälter auch durch Trennwände in drei oder vier gleichgroße oder unterschiedlich große Kammern geteilt sein. In gleicher Weise können auch zwei oder mehrere Behälter, jeweils mit oder ohne Trennwand, verschiedene Behandlungsstufen darstellen. Die unterschiedliche Ausgestaltung (Behälter Aufteilung, Behälter Anzahl) kann mit dem hier zu Grunde liegenden Verfahren und der Vorrichtung in der jeweils vorhandenen Aufteilung genutzt werden. Anstelle einer die Trennwand durchgreifenden Öffnung, wie in den Ausführungsbeispielen beschrieben, kann zwischen der Vorklärstufe und der biologischen Behandlungsstufe im oberen Bereich der Trennwand eine offene Verbindung vorhanden sein, durch die selbsttätig vorgeklärtes Abwasser aus der Vorklärstufe beim Abpumpen von Klarwasser in die biologische Behandlungsstufe fließt.

Um zu verhindern, dass während der Belüftung Belebtschlamm aus der biologischen Behandlungsstufe in die Vorklärstufe läuft, kann, unabhängig davon, an welcher Stelle sich innerhalb der Trennwand die Öffnung befindet, durch konstruktive Maßnahmen begegnet werden. Möglich ist dieses beispielsweise durch eine Tauchwand, ein getauchtes Rohr oder eine Kombination dieser beiden Elemente oder durch eine anderweitige Maßnahme. Gleiches gilt auch auf Seiten der Vorklärstufe um zu verhindern, dass bei einer Schlammentnahme und dem damit verbundenen Absinken des Wasserspiegels in der Vorklärstufe Belebtschlamm aus der biologischen Reinigungsstufe in die Vorklärstufe gelangt.

Bezüglich der Konzeption der Trennvorrichtung kann diese auch als einer Kammer innerhalb des Behälters vorgesehen sein, sodass dann kein separates Gehäuse für die Trennvorrichtung hergestellt werden muss.

Das hier beschriebene Verfahren und die beschriebenen Vorrichtungen eignen sich auch für die Nachrüstung bestehender Behälter, da die bestehenden Behälter in der Regel in den Trennwänden entsprechende Öffnungen besitzen, die bei einer Nachrüstung mit konventionellen SBR-Systemen aufwändig verschlossen und abgedichtet werden müssen.

Weiterhin ist von großem Vorteil, das in kurzen Zeiträumen (z. B. alle 30 Minuten) kleine definierte Wassermengen aus der Anlage herausgefordert werden. Insbesondere bei den häufig nachgeschalteten Versickerungsanlagen ergibt sich hierdurch der Vorteil, dass diese nicht überlastet werden und es auch zu keinem Einstau der Versickerungsanlagen mit den bekannten nachteiligen Folgen kommt.

Ein weiterer Vorteil der kurzen Zeiträume zwischen zwei Fördervorgängen des Klarwasserabzuges ist, dass in der Anlage nur geringe Wassermengen gespeichert werden müssen (gerade nur für den Zeitraum zwischen zwei Fördervorgängen, also z. B. für 30 Minuten). Damit kann wertvolles Behältervolumen für die Abwasserreinigung verwendet werden, anstatt es für die Speicherung von Abwasser zu verwenden, wie es bei konventionellen SBR-Systemen der Fall ist, bei denen der Klarwasserabzug nur alle sechs oder alle acht oder alle 12 Stunden oder einem sonstigen langen Zeitraum stattfindet.

## Patentansprüche

1. Verfahren zur Reinigung von Abwasser mittels einer Kleinkläranlage, insbesondere einer für einen dezentralen Einsatz vorgesehenen Kleinkläranlage, mit einem Zulauf (2), einer Vorklärstufe (4), einer biologischen Behandlungsstufe (5) und einer der biologischen Behandlungsstufe (5) zugeordneten Trennvorrichtung (7, 18) mit einem Klarwasserabzug, **dadurch gekennzeichnet, dass** die Trennvorrichtung (7, 18) innerhalb der biologischen Behandlungsstufe (5) angeordnet ist, dass in der Trennvorrichtung (7, 18) eine Trennung zwischen gereinigtem Abwasser und Belebtschlamm stattfindet und dass der Durchsatz der Anlage durch den Klarwasserabzug gesteuert wird, indem mittels einer durch eine Steuereinheit ansteuerbaren Pumpe, etwa eines Drucklufthebers (9, 9.1) diskontinuierlich Klarwasser aus der Trennvorrichtung (7, 18) abgezogen wird, wobei in einer Klarwasserförderperiode durch Abziehen von Klarwasser aus der Trennvorrichtung aus deren obersten Bereich nur ein Bruchteil des in der Trennvorrichtung (7, 18) befindlichen Wassers als Klarwasser abgezogen wird, an welchen Klarwasserabzug der Zulauf von vorgeklärtem Abwasser aus der Vorklärstufe (4) in die biologische Behandlungsstufe (5) gekoppelt ist, wobei der Zufluss von vorgeklärtem Abwasser aus der Vorklärstufe (4) in die biologische Reinigungsstufe (5) hydraulisch an den Klarwasserabzug gekoppelt dergestalt erfolgt, dass allein aufgrund eines sinkenden Flüssigkeitsspiegels in der Trennvorrichtung (7, 18) ein Nachströmen von vorgeklärtem Abwasser aus der Vorklärstufe (4) in die biologische Behandlungsstufe (5) selbsttätig erfolgt.

2. Verfahren nach Anspruch 1, **dadurch gekennzeichnet, dass** in Abhängigkeit von der Höhe des Flüssigkeitsspiegels des in der Vorklärstufe (4) befindlichen Abwassers und/oder in Abhängigkeit von einer Änderung des Flüssigkeitsspiegels des in der Vorklärstufe (4) befindlichen Abwassers innerhalb einer definierten Zeitspanne die Länge einer oder mehrerer Klarwasserabzugsperioden und/oder die Länge zwischen der zwei Klarwasserabzugsperioden befindlichen Pausen gesteuert werden.

3. Verfahren nach einem der Ansprüche 1 bis 2, **dadurch gekennzeichnet, dass** die Trennvorrichtung periodisch zum Unterstützen des Trennvorganges mit Vibrationen beaufschlagt wird.

4. Kleinkläranlage, insbesondere für einen dezentralen Einsatz vorgesehene Kleinkläranlage, mit einem Zulauf (2), einer Vorklärstufe (4), einer biologischen Behandlungsstufe (5) und einer der biologischen Behandlungsstufe (5) zugeordneten Trennvorrichtung (7, 18) mit einem Klarwasserabzug, **dadurch gekennzeichnet, dass** die Trennvorrichtung (7, 18) innerhalb der biologischen Behandlungsstufe (5) angeordnet ist, dass die Trennvorrichtung (7, 18) zur Trennung von gereinigtem Abwasser und Belebtschlamm in der Trennvorrichtung (7, 18) ausgebildet ist und dass die Anlage über
eine mit ihrer eingangsseitigen Mündung im obersten Bereich der Trennvorrichtung (7, 18) angeordnete Klarwasserabzugspumpe, etwa einen Druckluftheber (9, 9.1) verfügt, damit bei einer Klarwasserförderperiode nur ein Bruchteil der in der Trennvorrichtung befindlichen Flüssigkeit als Klarwasser abgezogen wird und die biologische Behandlungsstufe (5) und die dieser zugeordnete Trennvorrichtung (7, 18) hydraulisch dergestalt mit der Vorklärstufe verbunden sind, dass allein aufgrund eines sinkenden Flüssigkeitsspiegels in der Trennvorrichtung (7, 18) ein Nachströmen von vorgeklärtem Abwasser aus der Vorklärstufe (4) in die biologische Behandlungsstufe (5) selbsttätig erfolgt.

5. Kleinkläranlage nach Anspruch 4, **dadurch gekennzeichnet, dass** die Klarwasserabzugspumpe (9, 9.1) in einer Art und Weise an eine Wand (21) der Trennvorrichtung (7, 18) angeschlossen ist, dass bei einem Betrieb derselben auftretende Vibrationen in die Trennvorrichtung (7, 18) induziert werden.

6. Kleinkläranlage nach Anspruch 4 oder 5, **dadurch gekennzeichnet, dass** die Anlage über eine Überschussschlammfördereinrichtung, etwa als Druckluftheber (8, 8.1) ausgeführt, zum Abziehen von überschüssigem Belebtschlamm aus der biologischen Behandlungsstufe (5) verfügt.

7. Kleinkläranlage nach Anspruch 6, **dadurch gekennzeichnet, dass** die Überschussschlammfördereinrichtung (8, 8.1) in einer Art und Weise an eine Wand (8) der Trennvorrichtung (7, 18) angeschlossen ist, dass bei einem Betrieb derselben auftretende Vibrationen in die Trennvorrichtung (7, 18) induziert werden.

8. Kleinkläranlage nach einem der Ansprüche 4 bis 7, **dadurch gekennzeichnet, dass** die Trennvorrichtung (7, 18) unterseitig offen ist und dass sich unterhalb dieser Öffnung eine Schräge (11, 11.1) als Leitelement zum Leiten von innerhalb der Trennvorrichtung (7, 18) sedimentiertem Belebtschlamm in die biologische Behandlungsstufe (5) befindet.

9. Kleinkläranlage nach einem der Ansprüche 4 bis 8, **dadurch gekennzeichnet, dass** im Bereich der unteren Öffnung der Trennvorrichtung (7, 18) eine Luftblasenfalle zum Auffangen von durch die untere Öffnung in die Trennvorrichtung (7, 18) eintretenden Luftblasen angeordnet ist.

10. Kleinkläranlage nach Anspruch 9, **dadurch gekennzeichnet, dass** die Luftblasenfalle durch eine Aufnahme (20) gebildet wird, die durch ein von einer Wand (21) der Trennvorrichtung (18) nach innen abragendes Leitelement (19) gebildet ist.

11. Kleinkläranlage nach Anspruch 10, **dadurch gekennzeichnet, dass** das Leitelement (19) nach Art eines geneigten Leitbleches konzipiert ist.

## Claims

1. Method for cleaning waste water by means of a small treatment plant, in particular a small treatment plant provided for a decentralised use, having an intake (2), a preliminary clarification stage (4), a biological treatment stage (5) and a separation device (7, 18) allocated to the biological treatment stage (5) with a clear water extraction, **characterised in that** the separation device (7, 18) is arranged inside the biological treatment stage (5), that in the separation device (7, 18) a separation between purified waste water and activated sludge takes place, and that the throughput of the plant is controlled by the clear water extraction, wherein by means of a pump which can be controlled by a control unit, for example an air-lift pump (9, 9.1), clear water is taken discontinuously from the separation device (7, 18), whereby in a clear water feed period, by extracting clear water out of the separation device from the uppermost area, only a fraction of the water located in the separation device (7, 18) is extracted as clear water, and at said clear water extraction, the intake of waste water having undergone preliminary clarification from the preliminary clarification stage (4) is linked into the biological treatment stage (5), whereby the inflow of waste water having undergone preliminary clarification takes place from the preliminary clarification stage (4) into the biological purification stage (5) hydraulically linked to the clear water extraction in such a way that due alone to a falling liquid level in the separation device (7, 18), a flowing of waste water having undergone preliminary clarification takes place automatically from the preliminary clarification stage (4) into the biological treatment stage (5).

2. Method according to claim 1, **characterised in that**, depending on the height of the liquid level of the waste water located in the preliminary clarification stage (4) and / or depending on a change of the liquid level of the waste water located in the preliminary clarification stage (4) within a defined period, the length of one or more clarification water extraction periods and / or the length of the breaks between the two clear water extraction periods are controlled.

3. Method according to one of claims 1 to 2, **characterised in that** the separation device is periodically exposed to vibrations to support the separation process.

4. Small treatment plant, in particular a small treatment plant provided for a decentralised use, having an intake (2), a preliminary clarification stage (4), a biological treatment stage (5) and a separation device (7, 18) allocated to the biological treatment stage (5) with a clear water extraction, **characterised in that** the separation device (7, 18) is arranged inside the biological treatment stage (5), that the separation device (7, 18) is made for separating purified waste water and activated sludge in the separation device (7, 18) and that the plants has a clear water extraction pump, for example an air lift pump (9, 9.1), the inlet-side opening of which is arranged in the uppermost area of the separation device (7, 18), so that in a clear water feed period, only a fraction of the liquid located in the separation device is extracted as clear water, and the biological treatment stage (5) and the separation device (7, 18) allocated to it are hydraulically connected to the preliminary clarification stage in such a way that due alone to a falling liquid level in the separation device (7, 18), a flowing of waste water having undergone preliminary clarification takes place automatically from the preliminary clarification stage (4) into the biological treatment stage (5).

5. Small clarification plant according to claim 4 **characterised in that** the clear water extraction pump (9, 9.1) is connected to a wall (21) of the separation device (7, 18) in such a way that when it is in operation, vibrations arising are induced in the separation device (7, 18).

6. Small clarification plant according to claim 4 or 5 **characterised in that** the plant has an excess sludge feed device, made for example as an air lift pump (8, 8.1), to extract excess activated sludge from the biological treatment stage (5).

7. Small clarification plant according to claim 6 **characterised in that** the excess sludge transport device (8, 8.1) is connected to a wall (8) of the separation device (7, 18) in such a way that when it is in operation, vibrations occurring in the separation device (7, 18) are induced.

8. Small clarification plant according to any one of claims 4 to 7 **characterised in that** the separation device (7, 18) is open on the underside and that underneath this opening is a slope (11, 11.1) as a guide element for guiding activated sludge sedimented inside the separation device (7, 18) into the biological treatment stage (5).

9. Small clarification plant according to any one of claims 4 to 8 **characterised in that** an air bubble trap is arranged in the area of the lower opening of the separation device (7, 18) to catch air bubbles entering the separation device (7, 18) through the lower opening.

10. Small clarification plant according to claim 9 **characterised in that** the air bubble trap is formed by a holder (20) which is formed by a guide element (19) projecting inwards from a wall (21) of the separation device (18).

11. Small clarification plant according to claim 10 **characterised in that** the guide element (19) is designed as a type of sloping guide panel.

## Revendications

1. Procédé de nettoyage des eaux usées au moyen d'une petite station d'épuration, notamment d'une petite station d'épuration prévue pour une utilisation décentralisée, comprenant une amenée d'eau (2), une étape de décantation primaire (4), une étape de traitement biologique (5) et un dispositif de séparation (7, 18) affecté à l'étape de traitement biologique (5) avec un prélèvement d'eau claire, **caractérisé en ce que** le dispositif de séparation (7, 18) est disposé dans l'étape de traitement biologique (5), **en ce qu'**une séparation des eaux usées épurées et des boues activées se produit dans le dispositif de séparation (7, 18) et **en ce que** le débit de la station est piloté par le prélèvement d'eau claire, en prélevant de façon discontinue de l'eau claire dans le dispositif de séparation (7, 18) au moyen d'une pompe, une pompe par airlift (9, 9.1) par exemple, pilotée par une unité de commande, seule une fraction de l'eau se trouvant sous forme d'eau claire dans le dispositif de séparation (7, 18) étant prélevée au cours d'une période de transport de l'eau claire où l'eau de la zone supérieure est prélevée dans le dispositif de séparation, auquel prélèvement d'eau claire est couplée l'arrivée d'eau prédécantée provenant de l'étape de décantation primaire (4) dans l'étape de traitement biologique (5), le débit entrant d'eau prédécantée provenant de l'étape de décantation primaire (4) dans l'étape de traitement biologique (5) étant couplé de manière hydraulique au prélèvement d'eau claire de telle sorte que la seule baisse du niveau du liquide dans le dispositif de séparation (7, 18) provoque spontanément un afflux d'eau prédécantée provenant de l'étape de décantation primaire (4) dans l'étape de traitement biologique (5).

2. Procédé selon la revendication 1, **caractérisé en ce que** la durée d'une ou de plusieurs périodes de prélèvement d'eau claire et/ou la durée des pauses entre deux périodes de prélèvement d'eau claire est pilotée en fonction de l'importance du niveau des eaux usées se trouvant dans l'étape de décantation primaire (4) et/ou en fonction d'une variation du niveau des eaux usées se trouvant dans l'étape de décantation primaire (4) au cours d'une fenêtre de temps définie.

3. Procédé selon l'une des revendications 1 à 2, **caractérisé en ce que** le dispositif de séparation est périodiquement soumis à des vibrations afin de soutenir le procédé de séparation.

4. Petite station d'épuration, notamment petite station d'épuration prévue pour une utilisation décentralisée, comprenant une amenée d'eau (2), une étape de décantation primaire (4), une étape de traitement biologique (5) et un dispositif de séparation (7, 18) affecté à l'étape de traitement biologique (5) avec un prélèvement d'eau claire, **caractérisée en ce que** le dispositif de séparation (7, 18) est disposé dans l'étape de traitement biologique (5), **en ce que** le dispositif de séparation (7,18) est conformé pour séparer les eaux usées épurées et les boues activées dans le dispositif de séparation (7, 18) et **en ce que** la station dispose d'une pompe de prélèvement d'eau claire, une pompe par airlift (9, 9.1) par exemple, dont l'embouchure de prélèvement côté arrivée est située dans la zone supérieure du dispositif de séparation (7, 18), afin de prélever, au cours d'une période de transport de l'eau claire, seulement une fraction du liquide se trouvant sous forme d'eau claire dans le dispositif de séparation et afin de raccorder de façon hydraulique l'étape de traitement biologique (5) et le dispositif de séparation (7, 18) affecté à cette dernière avec l'étape de décantation primaire, de telle sorte que le seul abaissement du niveau de liquide dans le dispositif de séparation (7, 18) provoque un afflux spontané d'eau usée prédécantée en provenance de l'étape de décantation primaire (4) dans l'étape de traitement biologique (5).

5. Petite station d'épuration selon la revendication 4, **caractérisée en ce que** la pompe de prélèvement d'eau claire (9, 9.1) est raccordée de telle manière à une paroi (21) du dispositif de séparation (7, 18), que les vibrations survenant lors du fonctionnement de celle-ci sont induites dans le dispositif de séparation (7, 18).

6. Petite station d'épuration selon la revendication 4 ou 5, **caractérisée en ce que** la station dispose d'un équipement de transport des boues excédentaires, conformé par exemple à la manière d'une pompe à airlift (8, 8.1), destiné à prélever les boues activées excédentaires dans l'étape de traitement biologique (5).

7. Petite station d'épuration selon la revendication 6, **caractérisée en ce que** l'équipement de transport des boues excédentaires (8, 8.1) est raccordé d'une telle manière à une paroi (8) du dispositif de séparation (7, 18), que les vibrations survenant lors du fonctionnement de celui-ci sont induites dans le dispositif de séparation (7, 18)

8. Petite station d'épuration selon l'une des revendications 4 à 7, **caractérisée en ce que** le dispositif de séparation (7, 18) est ouvert sur la face inférieure et **en ce qu'**une pièce oblique (11, 11.1) faisant office d'élément de guidage pour guider, à l'intérieur du dispositif de séparation (7, 18), les boues activées sédimentées vers l'étape de traitement biologique (5), se trouve sous cette ouverture.

9. Petite station d'épuration selon l'une des revendications 4 à 8, **caractérisée en ce qu'**un piège à bulles d'air est disposé dans la zone de l'ouverture inférieure du dispositif de séparation (7, 18) afin de capturer les bulles d'air qui pénètrent par l'ouverture inférieure dans le dispositif de séparation (7, 18).

10. Petite station d'épuration selon la revendication 9, **caractérisée en ce que** le piège à bulles d'air est formé par une cage (20), laquelle est formée par un élément de guidage (19) en saillie vers l'intérieur par rapport à une paroi (21) du dispositif de séparation (18).

11. Petite station d'épuration selon la revendication 10, **caractérisée en ce que** l'élément de guidage (19) est conçu à la manière d'une tôle de guidage inclinée.
